# EUROPÄISCHE PATENTSCHRIFT

(11) **EP 0 673 673 B1**
(45) Veröffentlichungstag und Bekanntmachung des Hinweises auf die Patenterteilung: **06.12.2000**
(21) Anmeldenummer: 95109705.4
(22) Anmeldetag: 23.03.1993
(51) Int. Cl.: B01D 63/02, B29C 53/66, B29C 70/00

(54) **Hohlfadenbündel sowie Verfahren zu seiner Herstellung**
Hollow filament bundles and process for manufacturing them
Faisceaux de filaments creux ainsi que les procédés pour leur fabrication

(30) Priorität: 27.03.1992 DE 4210154; 14.09.1992 DE 4230696
(43) Veröffentlichungstag der Anmeldung: 27.09.1995
(62) Teilanmeldung aus: 93906585.0
(73) Patentinhaber: Akzo Nobel N.V., 6824 BM Arnhem (NL)
(72) Erfinder: Pasquali, Renato, D-42389 Wuppertal (DE); Martin, Manfred, D-42289 Wuppertal (DE); Riesop, Peter, D-45525 Hattingen (DE)
(74) Vertreter: Fett, Günter

(56) Entgegenhaltungen:
- EP-A- 0 089 122
- EP-A- 0 442 147
- FR-A- 2 340 892
- GB-A- 2 012 187
- US-A- 3 557 962
- US-A- 4 276 687

## Beschreibung

Die Erfindung betrifft ein Hohlfadenbündel aus lagenförmig übereinander angeordneten Hohlfäden und zwischen den Hohlfadenlagen angeordneten Fadenlagen, bei welchem in Draufsicht auf das Hohlfadenbündel die Hohlfäden wellenförmig oder im wesentlichen geradlinig und die Fäden, die einen kleineren Durchmesser aufweisen als die Hohlfäden, wellenförmig ausgebildet sind, und wobei die Fäden so ausgebildet und/oder angeordnet sind, daß sich die Hohlfäden und die Fäden an mehreren Stellen überkreuzen und aufeinander aufgelegt und nicht verwebt, verwirkt oder anderweitig verbunden sind, sowie Verfahren zu seiner Herstellung.

Hohlfadenbündel aus sich überkreuzenden und im wesentlichen in Längsrichtung des Hohlfadenbündels sich erstreckenden Hohlfäden sind hinreichend bekannt (US-A- 4 346 006). Ihre Anwendung findet - je nach Art der verwendeten Hohlfäden - zur Wärme- und/oder Stoffübertragung im technischen Bereich, beispielsweise zur umgekehrten Osmose, zur Ultra- oder Mikrofiltration, zur Pervaporation, zur Membrandestillation usw, insbesondere aber auch im medizinischen Bereich statt, hier insbesondere zur Behandlung von Blut, beispielsweise zur Dialyse, Blutoxygenation, Plasmaseparation, Plasmapherese, Hämofiltration, als Blutwärmetauscher usw. Für all diese Einsatzgebiete kann auch das erfindungsgemäße Hohlfadenbündel verwendet werden.

Gegenüber den bekannten Hohlfadenbündeln stellt das erfindungsgemäße Hohlfadenbündel durch die zwischen den Hohlfadenlagen angeordneten Fadenlagen eine erhebliche Verbesserung dar, da es bei gleicher Hohlfadenmenge zu erheblich höheren Wärmeübertragungs- und/oder Stoffübertragungs- bzw. Stoffaustauschleistungen führt. Selbst wenn der Anteil aller Fadenquerschnittsflächen beispielsweise nur 1 % aller Hohlfadenquerschnittsflächen in einem erfindungsgemäßen Hohlfadenbündel beträgt, so kann die Leistungssteigerung - verglichen mit einem Hohlfadenbündel ohne Fadenzwischenlagen - beispielsweise 10 % bis 30 % betragen. So konnte beispielsweise bei der Verwendung von Celluloseacetat-Hohlfäden in einem Dialysator dessen Leistung auf teilweise weit über 20 % gesteigert werden, die damit weit über den Leistungsdaten aller bisher bekannten vergleichbaren Dialysatoren lag.

Da die Herstellung des erfindungsgemäßen Hohlfadenbündels auf technisch einfache Art und Weise möglich ist und insbesondere die Verarbeitung frischgesponnener Hohlfäden im On-line-Verfahren gestattet, können durch die Erfindung auch kostengünstigere Hohlfadenbündel zur Verfügung gestellt werden.

Die für das erfindungsgemäße Hohlfadenbündel geeigneten Hohlfäden, die häufig auch als Hohlfasern, Kapillaren, Röhrchen, dünnwandige Schläuche oder ähnlich bezeichnet werden, können eine poröse, insbesondere mikroporöse, oder eine nichtporöse Wand aufweisen; sie werden dann als poröse, mikroporöse bzw. nichtporöse Hohlfäden bezeichnet. Hohlfäden, deren Wand für Stoffe ganz oder teilweise durchlässig, also permeabel oder semipermeabel ist, und die sich demzufolge zum Stoffaustausch, zur Stofftrennung oder zur Stoffübertragung eignen, werden häufig auch als Kapillarmembranen bezeichnet. Derartige Hohlfäden sind an sich bekannt. Dies gilt auch für die zweckmäßigen Abmessungen des Innen- bzw. Außendurchmessers und der Wanddicke der Hohlfäden sowie für die geeigneten Werkstoffe, in der Regel Polymere oder cellulosische Werkstoffe, aus denen die Hohlfäden bestehen. Die Außendurchmesser der Hohlfäden liegen beispielsweise in folgenden Bereichen: Für die Dialyse von 150 µm bis 280 µm; für die Oxygenation von 150 µm bis 500 µm; für die Plasmapherese von 150 µm bis 650 µm. Die für das erfindungsgemäße Hohlfadenbündel geeigneten Hohlfäden können an der Außen- und/oder Innenfläche und/oder ggf. in den Poren ihrer Wand beispielsweise immobilisierte bioaktive Substanzen, Zellen, Proteine od.dgl. aufweisen. Sie können auch andere adsorptive Eigenschaften haben. Hohlfäden mit einer für Stoffe im wesentlichen undurchlässigen Wand werden häufig zur Wärmeübertragung, also in Wärmeaustauschern eingesetzt.

Stoffübertragung im Sinne der vorliegenden Erfindung umfaßt auch den Stoffaustausch, bei dem beispielsweise gleichzeitig eine Stoffübertragung von einem gasförmigen oder flüssigen Medium auf ein flüssiges oder gasförmiges Medium und umgekehrt erfolgt.

Als Faden für die zwischen den Hohlfadenlagen angeordneten Fadenlagen können zwar auch Hohlfäden, insbesondere aber Multifilamentfäden oder Monofile, also sogenannte Vollfäden, verwendet werden. Als Fäden können auch texturierte Fäden verwendet werden.

Andere Begriffe für "wellenförmig" können sein: Zick-Zack-förmig, schlangenlinienförmig, mäanderförmig oder dergleichen.

Die Hohlfäden können onduliert sein und zu diesem Zweck auch erst unmittelbar zuvor einem Ondulierverfahren, wie es beispielsweise aus der DE-OS 33 01 268 bekannt ist, unterworfen werden.

Das Verhältnis aus Hohlfadenzahl zu Fadenzahl kann im Bereich von 1 : 0,1 bis 1 : 5 liegen, es ist vorzugsweise jedoch 1 : 1. Der Durchmesser der Fäden ist kleiner, insbesondere wesentlich kleiner als der Durchmesser bzw. eine damit vergleichbare Abmessung der Hohlfäden. Wesentlich kleiner bedeutet beispielsweise, daß der Durchmesser der Fäden nur 1/10 des Durchmessers der Hohlfäden beträgt. Damit beträgt die Querschnittsfläche der Fäden nur 1/100 der Querschnittsfläche der Hohlfäden. So kann beispielsweise der Gesamtdurchmesser eines multifilen Polyesterfadens 70 bis 100 µm betragen (Einzelfilament ca. 20 µm).

Das erfindungsgemäße Hohlfadenbündel mit wellenförmig ausgebildeten Hohlfäden kann erfindungsgemäß hergestellt werden, indem auf eine rotierende Trommel gleichzeitig wenigstens ein Hohlfaden und wenigstens ein Faden zur Bildung wenigstens eines Wickels aufgewickelt werden, vor dem Aufwickeln auf die Trommel der Hohlfaden (die Hohlfäden) über (wenigstens) eine erste und der Faden (die Fäden) über (wenigstens) eine zweite hin- und herbewegte (changierende) Fadenführungseinrichtung geführt wird (werden), die erste(n) Fadenführungseinrichtung(en) in jeweils entgegengesetzter (gegenläufiger) Richtung wie die zweite(n) Fadenführungseinrichtung(en) hin- und herbewegt wird (werden) oder die zweite(n) Fadenführungseinrichtung(en) mit einer höheren Geschwindigkeit hin- und herbewegt wird (werden) als die erste(n) Fadenführungseinrichtung(en), nach dem Aufwickeln der gewünschten Hohlfadenmenge das Aufwickeln beendet wird und der (die) auf der Trommel gebildete(en) Wickel vor oder nach dem Entfernen von der Trommel an wenigstens einer Stelle im wesentlichen quer zur Längsrichtung der Hohlfäden durchtrennt wird (werden).

Unter Trommel wird hierbei insbesondere eine runde Trommel, also eine Trommel mit rundem Querschnitt, verstanden. Die Trommel kann aber auch einen polygonalen Querschnitt, beispielsweise einen sechseckigen, achteckigen usw. Querschnitt, aufweisen. Der Vorteil einer runden Trommel besteht unter anderem darin, daß dabei im Bereich der Fadenführungseinrichtungen keine Anpreßwalzen oder andere Festhaltemittel zum Festhalten oder Festlegen der obersten Fadenlagen benötigt werden, wie sie bei einer nicht runden Trommel ggf. erforderlich sind. Die Trommel kann aber auch ein endloses umlaufendes über wenigstens zwei Rollen geführtes Band (Riemen) sein. So kann das Band beispielsweise über sechs ein Sechseck oder acht ein Achteck usw. bildende Rollen geführt werden. Die Fadenführungseinrichtungen sind dabei vorzugsweise in einem Bereich, in dem das Band durch eine Rolle umgelenkt also gekrümmt wird, angeordnet. Dann sind auch hierbei keine Festhaltemittel wie oben näher erläutert, erforderlich.

In Ausgestaltung des Verfahrens können die Hohlfäden und Fäden auch nur kurzzeitig auf einem Teilumfang der Trommel abgelegt werden und unmittelbar daran anschließend unter Beibehaltung der Anordnung und wellenförmigen Ausbildung der Hohlfäden und Fäden von einer zweiten rotierenden Trommel - im Sinne der oben gegebenen Definition von Trommel - übernommen und darauf aufgewickelt werden. Insbesondere kann dabei die zweite Trommel im wesentlichen einer Haspel entsprechen, die eine einfachere Aufteilung des Hohlfadenwikkels in eine entsprechende Anzahl von Hohlfadenbündeln ermöglicht. Auch kann als zweite Trommel mit Vorteil eine Vorrichtung ähnlich der in der DE-OS 33 01 268 (Fig. 33 und 34) beschriebenen Vorrichtung verwendet werden, indem der dort verwendete rotierende Arm (27) mit der Fadenführungseinrichtung (1) weggelassen wird und die durch die endlosen Rollenketten (25) usw. (2; 26) gebildete sechsekkige Trommel um ihre Längsachse rotierbar ausgebildet wird. Die Anordnung der Längsachse, also der Drehachse der zweiten Trommel kann horizontal oder vertikel oder geneigt sein.

Werden zwei oder mehr Hohlfäden und/oder Fäden zur Herstellung des erfindungsgemäßen Hohlfadenbündels mit wellenförmig ausgebildeten Hohlfäden verwendet, so werden diese - jede der beiden Arten für sich getrennt - vorzugsweise durch Verwendung je einer kammförmigen hin- und herbewegten Fadenführungseinrichtung in seitlichen Abständen voneinander im wesentlichen äquidistant aufgewickelt. Es ist jedoch auch möglich, eine Vielzahl von Hohlfäden und/oder Fäden aufgeteilt in mehrere Gruppen gleichzeitig übereinander aufzuwickeln und zu diesem Zweck für jede Hohlfadengruppe und jede Fadengruppe eine kammförmige hin- und herbewegte Fadenführungseinrichtung zu verwenden, wobei diese übereinander oder auf einer zur Oberfläche der Trommel äquidistanten Strecke gleichmäßig verteilt angeordnet sein können. Die Fadenführungseinrichtungen für die Hohlfäden können dabei so angeordnet sein bzw. so hin- und herbewegt werden, daß die durch sie der Trommel zugeführten Hohlfadengruppen im wesentlichen übereinander aufgewickelt werden, oder aber so, daß sie versetzt zueinander aufgewickelt werden. Das gleiche gilt entsprechend für die hin- und herbewegten kammförmigen Fadenführungseinrichtungen für die Fadengruppen. Eine solche Fahrweise bietet sich an, wenn beispielsweise 100 Hohlfäden und 100 Fäden gleichzeitig zu einem relativ schmalen Bündel aufgewickelt werden sollen, indem beispielsweise 10 Gruppen mit je 10 Hohlfäden und 10 Gruppen mit je 10 Fäden abwechselnd übereinander gleichzeitig aufgewickelt werden. In jedem Falle gilt aber auch hierbei, daß die Fadenführungseinrichtungen für die Hohlfäden gegenläufig, d.h. in jeweils entgegengesetzter Richtung wie die Fadenführungseinrichtungen für die Fäden hin- und herbewegt werden oder die Fadenführungseinrichtungen für die Fäden mit einer höheren Geschwindigkeit hin- und herbewegt werden als die Fadenführungseinrichtungen für die Hohlfäden, um die gewünschte Verkreuzung zu erreichen.

Hohlfäden und Fäden können aus demselben Material, aber auch aus unterschiedlichen Materialien bestehen. Sollen die Fäden aus demselben Material wie die Hohlfäden bestehen, so ist es möglich, diese durch Verwendung entsprechender Spinndüsen auf derselben Spinnmaschine herzustellen, auf der auch die Hohlfäden hergestellt werden. Bei einem größeren Längenbedarf für die Fäden, was dann der Fall ist, wenn die Changiergeschwindigkeit der Fadenführungseinrichtung für die Fäden größer ist als die Changiergeschwindigkeit für die Hohlfäden, kann die größere Fadenlänge durch Verstrecken der Fäden vor dem Aufwickeln erreicht werden.

Darüber hinaus ist es auch möglich, unterschiedliche Hohlfäden durch gleichzeitiges Aufwickeln in einem Hohlfadenbündel zu vereinen. Auch ist es möglich, auf einer Trommel mehrere Hohlfadenbündel nebeneinander gleichzeitig herzustellen.

Die Länge des Weges der hin- und herbewegten Fadenführungseinrichtung für die Hohlfäden und die Länge des Weges der hin- und herbewegten Fadenführungseinrichtung für die Fäden, die sogenannte Hublänge, kann gleich oder geringfügig unterschiedlich sein, falls sich dies als zweckmäßig erweisen sollte. Beispielsweise ist es bei einer größeren Hublänge für die Fäden möglich, die an den Umkehrpunkten gebildeten Fadenschlaufen geringfügig aus dem Hohlfadenbündel herausragen zu lassen.

Wie sich aus dem oben Gesagten ergibt, und dies ist ein wesentliches Merkmal der Erfindung, sind die Fäden mit den Hohlfäden nicht verwebt, verwirkt oder anderweitig verbunden, sondern sie werden lediglich auf den jeweils zuvor auf der Wickeltrommel gebildeten Hohlfadenlagen aufgelegt und von der nächstfolgenden Hohlfadenlage überdeckt, also abwechselnd übereinander (aufeinander) aufgewickelt. Dies hat zur Folge, daß die Fäden oder die Hohlfäden einzeln auch seitlich aus dem Hohlfadenbündel herausgezogen werden können, so daß auch insoweit ein wesentlicher Unterschied zu anderen bekannten Hohlfadenbündeln dieser Art besteht und dieser Umstand auf das Herstellungsverfahren schließen läßt.

Der auf der Trommel gebildete Wickel aus Hohlfäden und Fäden hat in der Regel keinen runden Querschnitt. Nach dem Durchtrennen des Wickels und dem Ausrichten des durchtrennten Wickels in Längsrichtung der Hohlfäden, beispielsweise durch Ablage des durchtrennten Wickels auf eine ebene Unterlage, läßt sich das auf diese Weise gebildete Hohlfadenbündel zu einem Bündel mit rundem Querschnitt umformen, beispielsweise durch die in der DE-OS 33 01 268 beschriebene Wickeleinrichtung, ohne daß die zuvor durch das Aufwickeln erreichte geordnete Anordnung der Hohlfäden verloren geht. Dies überrascht umso mehr, als - wie oben bereits ausgeführt - die Hohlfäden und die Fäden nicht miteinander verbunden sind. Offenbar verhindern die Fäden ein Verrutschen der Hohlfäden, so daß die einmal erreichte seitlich äquidistante Anordnung der Hohlfäden erhalten bleibt.

Die nicht zur Erfindung gehörende Vorrichtung zum Herstellen des erfindungsgemäßen Hohlfadenbündels mit wellenförmig ausgebildeten Hohlfäden besteht aus einer rotierenden Trommel (Wickeltrommel) zum gleichzeitigen Aufwickeln wenigstens eines Hohlfadens und wenigstens eines Fadens und weist wenigstens eine hin- und herbewegte (changierende) Fadenführungseinrichtung zum Zuführen des Hohlfadens bzw. der Hohlfäden auf die Trommel und wenigstens eine hin- und herbewegte (changierende) Fadenführungseinrichtung zum Zuführen des Fadens bzw. der Fäden auf die Trommel auf, wobei die Fadenführungseinrichtung (Fadenführungseinrichtungen) für den Hohlfaden (die Hohlfäden) in jeweils entgegengesetzter Richtung, also gegenläufig, wie die Fadenführungseinrichtung (Fadenführungseinrichtungen) für den Faden (die Fäden) hin- und herbewegt wird (werden) oder die Fadenführungseinrichtung (Fadenführungseinrichtungen) für den Faden (die Fäden) mit einer höheren Geschwindigkeit hin- und herbewegt wird (werden) als die Fadenführungseinrichtung (Fadenführungseinrichtungen) für den Hohlfaden (die Hohlfäden).

Die Anzahl der Changierbewegungen der Fadenführungseinrichtungen, also die Anzahl der sogenannten Doppelhübe, pro Zeiteinheit wird zweckmäßigerweise so auf die Drehzahl der Trommel abgestimmt, daß in Umfangsrichtung der Trommel eine gleichmäßige Bewicklung mit Hohlfäden und Fäden erreicht wird, daß also aufeinanderfolgende Lagen in Umfangsrichtung betrachtet, geringfügig zueinander versetzt angeordnet sind.

Die Wickeltrommel wird im On-line-Verfahren mit allmählich abnehmender Drehzahl angetrieben, so daß am Wickelumfang eine gleichbleibende Umfangsgeschwindigkeit erreicht wird. Die Changiergeschwindigkeit der Fadenführungseinrichtungen kann auf diese sich ändernde Drehzahl der Wickeltrommel abgestimmt werden oder konstant gehalten werden, je nachdem ob eine sogenannte Präzisionswicklung oder wilde Wicklung erreicht werden soll. Um eine Bilderung, die häufig auch als Spiegel bezeichnet wird, im Wickel zu vermeiden, können die Antriebe für die Fadenführungseinrichtungen mit einer Störeinrichtung, einer sogenannten Spiegelstörung, versehen werden.

Nachfolgend werden beispielshalber einige Zahlenwerte für ein Hohlfadenbündel mit wellenförmigen ausgebildeten Hohlfäden genannt, die die Erfindung näher erläutern, in keiner Weise jedoch beschränken sollen. In einem Fall wurden 40 Hohlfäden und 40 Fäden, aufgeteilt in je 5 Gruppen mit 8 Hohlfäden bzw. 8 Fäden auf eine Trommel mit einem Durchmesser von 120 cm bei einer Umfangsgeschwindigkeit = Aufwickelgeschwindigkeit von 52 m/min zu einem 80 mm breiten Wickel aufgewickelt, der anschließend durch Zertrennen in mehrere kürzere Hohlfadenbündel aufgeteilt wurde, die danach zu Hohlfadenbündeln mit einem im wesentlichen runden Querschnitt umgeformt wurden. Hohlfäden, die sich nach dem erfindungsgemäßen Verfahren zu einem erfindungsgemäßen Hohlfadenbündel mit wellenförmig ausgebildeten Hohlfäden problemlos verarbeiten ließen, hatten einen Außendurchmesser im Bereich von 150 bis 400 µm. Die Fäden waren Filamentfäden mit einem Gesamtdurchmesser von ca. 21 µm und bestanden aus 14 Einzelfilamenten. In einem anderen Fall wurden 5 Hohlfäden und 5 Fäden über je eine hin- und herbewegte kammförmige Fadenführungseinrichtung der Wickeltrommel zugeführt und seitlich äquidistant auf der Trommel zu einem Wickel aufgewickelt. Die Geschwindigkeit der Fadenführungseinrichtung für die Hohlfäden betrug dabei weniger als ein Doppelhub pro Umdrehung der Trommel, während die Geschwindigkeit der Fadenführungseinrichtung für die Fäden ca. 8 Doppelhübe pro Umdrehung der Trommel betrug. Die Wellenlänge der Hohlfadenlagen war somit mehr als 8 mal größer als die Wellenlänge der Fadenlagen. Die Changierbreite beider Fadenführungseinrichtungen dagegen war gleich, so daß die Hohlfadenlagen und die Fadenlagen die gleiche Wellenamplitude aufwiesen.

Das erfindungsgemäße Hohlfadenbündel mit im wesentlichen geradlinig ausgebildeten Hohlfäden kann erfindungsgemäß hergestellt werden, indem wenigstens zwei Hohlfadenscharen aus parallel nebeneinander in je einer gemeinsamen Ebene in Hohlfadenlängsrichtung vorwärtsbewegten Hohlfäden unter unterschiedlichen Winkeln, also aus unterschiedlichen Richtungen, aufeinanderzu seitlich geringfügig zueinander versetzt einer gemeinsamen Umlenkeinrichtung zugeführt werden und unmittelbar vor dem Auflaufen der Hohlfäden auf die Umlenkeinrichtung in das gebildete Hohlfadenfach mit einer hin- und herbewegten (changierenden) Fadenführungseinrichtung wenigstens ein Faden eingetragen (eingelegt) wird, und zwar derart, daß jeder Hohlfaden von wenigstens einem Faden in - vorzugsweise regelmäßigen - Abständen immerwiederkehrend überkreuzt wird.

Vorzugsweise werden genausoviele Fäden eingetragen, wie Hohlfäden vorhanden sind, und kreuzt ein Faden nur einen, zwei oder drei Hohlfäden, also der erste Faden den ersten Hohlfaden oder den ersten und zweiten Hohlfaden oder den ersten, zweiten und dritten Hohlfaden, der zweite Faden den zweiten Hohlfaden oder den zweiten und dritten Hohlfaden oder den zweiten, dritten und vierten Hohlfaden usw. Auf diese Weise kann eine kleine Hubweglänge für die Fadenführungseinrichtung zum Einlegen der Fäden eingestellt werden. Es können jedoch auch weniger oder mehr Fäden, als Hohlfäden vorhanden sind, eingetragen werden.

Unter dem oben benutzten Begriff "Hohlfadenfach" wird die Stelle verstanden, die in der Webtechnik als "Fach" bezeichnet wird und als der Zwischenraum definiert ist, der durch Heben und/oder Senken der Kettfäden entsteht und zum Eintragen des Schußfadens z.B. im Webschützen dient.

Im Gegensatz zur Fachbildung beim Webvorgang wird hier jedoch das Hohlfadenfach nicht durch abwechselndes Anheben und/oder Absenken der geradzahligen und/oder ungeradzahligen Hohlfäden gebildet, sondern durch Zuführen der Hohlfadenscharen unter unterschiedlichen Winkeln, d.h. aus unterschiedlichen Richtungen, aufeinanderzu zu der gemeinsamen Umlenkeinrichtung. Daher findet hier auch nicht wie beim Weben ein ständig sich wiederholendes kurzzeitiges Schließen des Faches vor der nächsten Fachbildung statt, sondern das Hohlfadenfach bleibt immer geöffnet. Daher braucht die Fadenführungseinrichtung auch nicht aus dem Hohlfadenfach herausbewegt zu werden (wie die Schußfadeneintragsmittel, z.B. die Webschützen, einer Webmachine), sondern sie kann ständig zwischen zwei Hohlfadenscharen, also in dem Hohlfadenfach, verbleiben und dort hin- und herbewegt werden.

Auch in Ausgestaltung dieses Verfahrens können die Hohlfäden und Fäden anschließend unter Beibehaltung ihrer Anordnung auf eine rotierende oder nicht rotierende Trommel o.dgl. aufgewickelt werden. Mit großem Vorteil kann hierfür ebenfalls die in der DE-OS 33 01 268 (Fig. 33 und 34) beschriebene Vorrichtung verwendet werden.

Vorzugsweise werden die Fadenscharen durch Verwendung je einer kammförmigen Fadenführungseinrichtung oder einer Einrichtung mit in einer oder mehreren Reihen angeordneten Fadenführungsösen gebildet. Es ist auch möglich, eine Vielzahl von Hohlfaden- und Fadenscharen gleichzeitig zu verarbeiten und zu diesem Zweck für jede Hohlfadenschar und jede Fadenschar eine kammförmige oder mit Ösen bestückte Fadenführungseinrichtung zu verwenden.

Nach dem Einlegen der Fäden kann das bandförmige Hohlfaden/Faden-Gebilde - beispielsweise durch Hindurchführen durch eine ringförmige Führungseinrichtung - zu einem Hohlfadenbündel mit im wesentlichen rundem Querschnitt umgeformt werden. Es hat sich nämlich völlig unerwartet gezeigt und muß schon geradezu als sensationell bezeichnet werden, daß auch bei einem solchen Umformen zu einem Hohlfadenbündel die Hohlfäden und die eingelegten Fäden relativ zueinander nicht verschoben werden. Das heißt, man kann nach dem Umformen das Hohlfadenbündel wieder zu dem ursprünglichen bandförmigen Hohlfaden/Faden-Gebilde zurückformen, ohne danach - wenn überhaupt - nennenswerte Verschiebungen der eingelegten Fäden feststellen zu können.

Auch hierbei können Hohlfäden und Fäden aus demselben Material, aber auch aus unterschiedlichen Materialien bestehen. Sollen die Fäden aus demselben Material wie die Hohlfäden bestehen, so ist es möglich, diese durch Verwendung entsprechender Spinndüsen auf derselben Spinnmaschine herzustellen, auf der auch die Hohlfäden hergestellt werden. Der größere Längenbedarf für die Fäden kann dabei durch Verstrecken der Fäden vor dem Einlegen erreicht werden.

Es ist auch möglich, unterschiedliche Hohlfäden zu einem Hohlfadenbündel zu vereinen. Auch ist es möglich, mehrere Hohlfadenbündel nebeneinander gleichzeitig herzustellen.

Die Länge des Weges der hin- und herbewegten Fadenführungseinrichtung für die Fäden kann so gewählt werden, daß die an den Umkehrpunkten gebildeten Fadenschlaufen geringfügig aus dem Hohlfadenbündel herausragen.

Wie oben bereits ausgeführt, werden bzw. sind die Fäden mit den Hohlfäden nicht verwebt, verwirkt oder anderweitig verbunden, sondern sie werden bzw. sind lediglich zwischen zwei Hohlfadenscharen eingelegt. Das erfindungsgemäße Hohlfadenbündel ist also sandwichartig aufgebaut, d.h. es folgen nacheinander: Eine Hohlfadenlage, eine Fadenlage, eine Hohlfadenlage usw., die nicht miteinander verbunden sind, sich an den Überkreuzungspunkten aber berühren. Dies hat zur Folge, daß die Fäden oder die Hohlfäden einzeln auch seitlich aus dem Hohlfadenbündel herausgezogen werden können, so daß auch insoweit ein wesentlicher Unterschied zu anderen bekannten Hohlfadenbündeln dieser Art besteht und dieser Umstand auf das Herstellungsverfahren schließen läßt.

Auch das so aus Hohlfäden und Fäden gebildete Bündel mit im wesentlichen geradlinig ausgebildeten Hohlfäden hat in der Regel zunächst keinen runden Querschnitt. Das zunächst bandförmige Hohlfadenbündel läßt sich jedoch zu einem Bündel mit rundem Querschnitt umformen, beispielsweise durch die in der DE-OS 33 01 268 beschriebene Wickeleinrichtung, ohne daß die zuvor erreichte geordnete Anordnung der Hohlfäden verlorengeht.

Die Vorrichtung zum Herstellen des erfindungsgemäßen Hohlfadenbündels mit im wesentlichen geradlinig ausgebildeten Hohlfäden besteht wenigstens aus einer stabförmigen Umlenkeinrichtung, vorzugsweise einer drehbaren oder angetriebenen Rolle, zum Umlenken des Hohlfadenbündels nach dem Einlegen des Fadens oder der Fäden, zwei stabförmigen Führungseinrichtungen, vorzugsweise zwei drehbaren oder angetriebenen Rollen, zum Führen von zwei Hohlfadenscharen, die so angeordnet sind, daß die Hohlfadenscharen unter einem unterschiedlichen Winkel der Umlenkeinrichtung zugeführt werden, so daß die Hohlfadenscharen vor der Umlenkeinrichtung ein Hohlfadenfach bilden, einer in dem Hohlfadenfach hin- und herbewegbaren (changierenden) Fadenführungseinrichtung (Changiereinrichtung) zum wellenförmigen, zick-zack-förmigen o.dgl. Einlegen eines Fadens oder mehrerer Fäden zwischen die Hohlfadenscharen und einer Führungseinrichtung zum Zuführen des Fadens bzw. der Fäden zu der hin- und herbewegbaren Fadenführungseinrichtung.

In Ausgestaltung der Vorrichtung können die Führungseinrichtungen für die Hohlfadenscharen darüber hinaus auch so angeordnet sein, daß sie zum Auffächern einer Hohlfadenschar in zwei oder mehr Hohlfadenscharen führen. So können beispielsweise die geradzahligen Hohlfäden einer Hohlfadenschar über die eine und deren ungeradzahligen Hohlfäden über die andere Führungseinrichtung geführt werden, so daß auf diese Weise zwei Hohlfadenscharen mit jeweils der halben Hohlfadenanzahl gebildet werden, die nach dem Einlegen des Fadens bzw. der Fäden dann wieder zu einem Hohlfadenbündel vereint werden.

Nachfolgend werden beispielshalber einige Zahlenwerte für ein Hohlfadenbündel mit im wesentlichen geradlinig ausgebildeten Hohlfäden genannt, die die Erfindung näher erläutern, in keiner Weise jedoch beschränken sollen. In einem Fall wurden 40 Hohlfäden und 40 Fäden zu einem endlosen Hohlfadenbündel verarbeitet, das anschließend durch Zertrennen in mehrere kürzere Hohlfadenbündel aufgeteilt wurde, die danach zu Hohlfadenbündeln mit einem im wesentlichen runden Querschnitt umgeformt wurden. Hohlfäden, die sich nach dem erfindungsgemäßen Verfahren zu einem erfindungsgemäßen Hohlfadenbündel problemlos verarbeiten ließen, hatten einen Außendurchmesser im Bereich von 150 bis 400 µm. Die Fäden waren Filamentfäden mit einem Gesamtdurchmesser von ca. 21 µm und bestanden aus 14 Einzelfilamenten.

Das hier offenbarte Verfahren und die Vorrichtung mit einer rotierenden Trommel ist nicht auf die Herstellung von Hohlfadenbündeln mit wellenförmig ausgebildeten Hohlfäden und wellenförmig ausgebildeten Fäden beschränkt. Es ist durchaus möglich, dieses Verfahren und diese Vorrichtung auch zur Herstellung von Hohlfadenbündeln mit im wesentlichen geradlinig ausgebildeten Hohlfäden einzusetzen, indem die Hohlfäden ohne Changierung auf der Trommel abgelegt werden und nur die Fäden changiert werden. Auch das Verfahren und die Vorrichtung zur Herstellung von Hohlfadenbündeln mit im wesentlichen geradlinig ausgebildeten Hohlfäden ist nicht auf eine solche Anordnung der Hohlfäden beschränkt. Es lassen sich mit diesen auch Bündel herstellen, in denen die Hohlfäden wellenförmig ausgebildet sind, indem beispielsweise die einzelnen Hohlfadenscharen changiert werden oder indem die sandwichartig aufgebauten Hohlfadenbündel mit im wesentlichen geradlinig ausgebildeten Hohlfäden einer changierenden Trommel zugeführt werden.

Die Erfindung wird nun anhand von Zeichnungen näher erläutert. Es zeigen in vereinfachter schematischer Darstellungsweise:
- Figur 1: eine Wickeltrommel und zwei Fadenführungseinrichtungen in Draufsicht,
- Figur 2: die Wickeltrommel und die Fadenführungseinrichtungen gemäß Fig. 1 in Seitenansicht,
- Figur 3: eine Hohlfadenlage und eine Fadenlage auf einer Wickeltrommel in Draufsicht,
- Figur 4: eine andere Ausgestaltung einer Hohlfadenlage und einer Fadenlage auf einer Wickeltrommel,
- Figuren 5 und 6: Ausgestaltungsformen der Wickeltrommel.
- Figur 7: in Draufsicht Hohlfaden- und Fadenscharen sowie Teile einer Vorrichtung zum Durchführen des Verfahrens,
- Figur 8: in Seitenansicht Hohlfaden- und Fadenscharen sowie eine Vorrichtung zum Durchführen des Verfahrens,
und
- Figur 9: in Seitenansicht eine weitere Ausführungsform des Verfahrens.

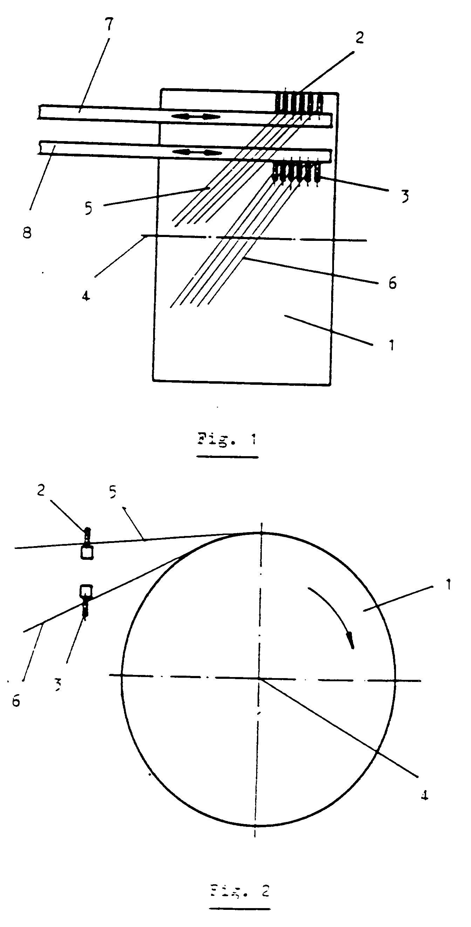

In Figur 1 ist in Draufsicht auf die Wickeltrommeloberfläche und in Figur 2 in Seitenansicht auf eine Wickeltrommelstirnseite dargestellt: Die um die Drehachse 4 rotierende runde Trommel 1, die hin- und herbewegbare kammförmige Fadenführungseinrichtung 2 für die Hohlfäden 5, die mit der hin- und herbewegbaren Stange 7 fest verbunden ist, sowie die hin- und herbewegbare Fadenführungseinrichtung 3 für die Fäden 6, die mit der hin- und herbewegbaren Stange 8 fest verbunden ist. Durch die Fadenführungseinrichtung 2 werden fünf Hohlfäden 5 und durch die Fadenführungseinrichtung 3 fünf Fäden 6 der runden Wickeltrommel 1 zugeführt. Die Antriebseinrichtungen für die Stangen 7 bzw. 8 und damit für die Fadenführungseinrichtungen 2 bzw. 3 sind nicht dargestellt. Ebenso nicht dargestellt ist die Antriebseinrichtung für die Trommel 1. Die Fadenführungseinrichtung 3 für die Fäden 6 wird hierbei mit einer höheren Geschwindigkeit hin- und herbewegt als die Fadenführungseinrichtung 2 für die Hohlfäden 5.

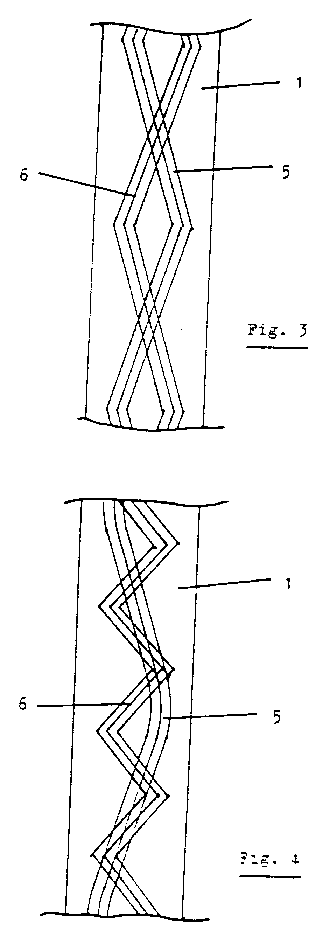

In Figur 3 ist ein Oberflächenabschnitt einer Wickeltrommel 1 dargestellt, auf der die erste Hohlfadenlage bestehend aus drei Hohlfäden 5 und die erste Fadenlage bestehend aus drei Fäden 6 aufgewickelt ist. Die Hohlfäden 5 und die Fäden 6 sind zick-zackförmig auf der Wickeltrommel 1 aufgewickelt, wobei die Wellenlänge und Wellenamplitude beider Lagen gleich ist, die Hohlfadenlage 5 gegenüber der Fadenlage 6 jedoch phasenverschoben angeordnet ist. Dies wird erreicht, indem die nicht dargestellte Fadenführungseinrichtung für die Hohlfäden 5 in jeweils entgegengesetzter (gegenläufiger) Richtung wie die nicht dargestellte Fadenführungseinrichtung für die Fäden 6 hin- und herbewegt wird. Wenn also die eine Fadenführungseinrichtung von links nach rechts bewegt wird, wird die andere Fadenführungseinrichtung von rechts nach links bewegt und umgekehrt und beide Fadenführungseinrichtungen erreichen ihren Umkehrpunkt, in dem sich ihre Bewegungsrichtung umkehrt, jeweils zum selben Zeitpunkt.

In Figur 4 ist eine Ausführungsform dargestellt, bei welcher die Hohlfadenlagen 5 eine wesentlich längere Wellenlänge aufweisen als die Fadenlagen 6. Die Wellenamplituden dagegen sind bei beiden gleich groß. Eine solche Ausführungsform wird erreicht, indem die Fadenführungseinrichtung für die Fäden 6 mit einer höheren Geschwindigkeit hin- und herbewegt wird als die Fadenführungseinrichtung für die Hohlfäden 5. Bei dieser Fahrweise bewegen sich die beiden Fadenführungseinrichtungen abwechselnd in dieselbe Richtung und danach in entgegengesetzte Richtungen, die Fadenführungseinrichtung für die Fäden 6 jedoch stets mit einer höheren Geschwindigkeit als die Fadenführungseinrichtung für die Hohlfäden 5.

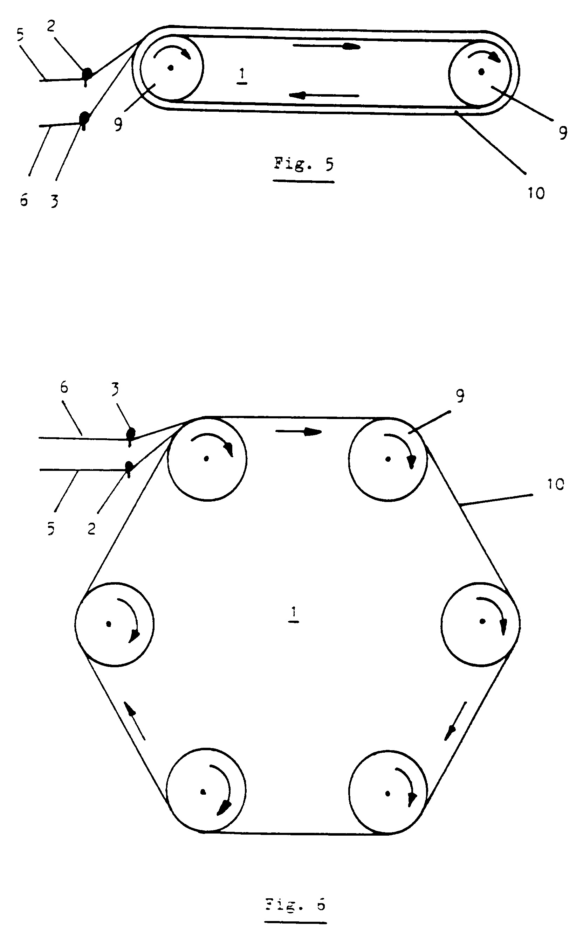

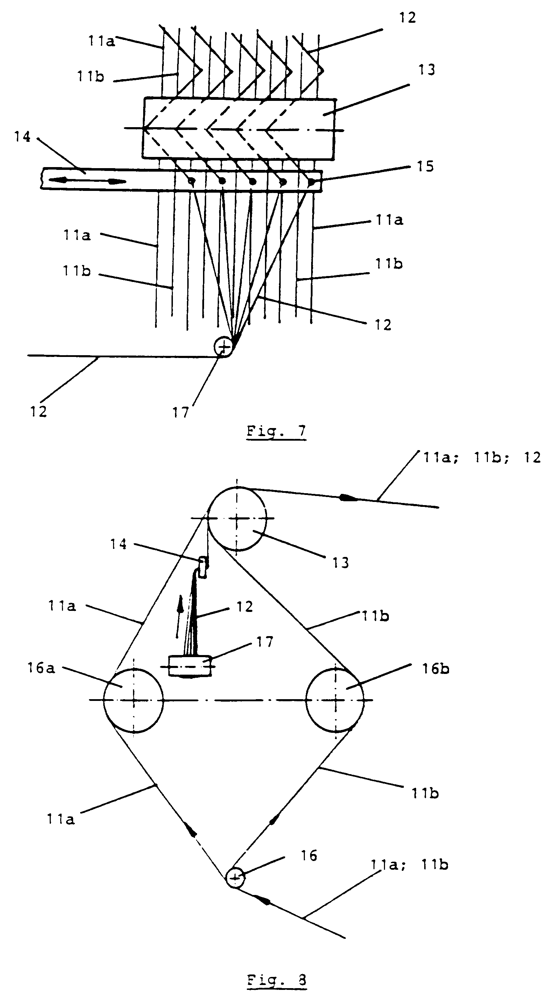

In Figur 5 ist eine von den beiden Rollen 9 und dem Band oder Riemen 10 und in Figur 6 ist eine von den sechs Rollen 9 und dem Band oder Riemen 10 gebildete rotierende Trommel 1 in Seitenansicht vereinfacht dargestellt. Die Rollen 9 sind ortsfest, jedoch um ihre Längsachsen drehbar angeordnet. Wenigstens eine der Rollen 9 wird durch eine nicht dargestellte Einrichtung beispielsweise einen Elektromotor, angetrieben. Die nicht angetriebene(n) Rolle(n) 9 wird (werden) durch das (den) umlaufende(n) Band (Riemen) 10 (s. Pfeil) in Drehung (Pfeilrichtung) versetzt. Die Position der Fadenführungseinrichtungen 2 und 3 für die Hohlfäden 5 bzw. die Fäden 6 ist ebenfalls dargestellt.

Auf diese Weise kann eine rotierende Trommel auch von drei, vier, fünf, sieben, acht usw. Rollen 9 und jeweils einem Band oder Riemen 10 gebildet werden. Ebenso können mehrere schmalere Bänder oder Riemen 10 nebeneinander angeordnet über längere gemeinsame Rollen 9 zur Bildung rotierender Trommeln verwendet werden, und zwar zum Aufwickeln mehrerer Hohlfadenstränge (-wickel) nacheinander oder gleichzeitig nebeneinander.

Wesentlich bei der vorliegenden Erfindung ist, daß sich die Hohlfäden im wesentlichen in Längsrichtung des Hohlfadenbündels erstrecken und dementsprechend die Umfangslänge des auf der rotierenden Trommel gebildeten Wickels (Stranges) wesentlich größer ist als seine Breite. Dies gilt gleichermaßen auch für die für den Wickel (Strang) erforderliche Auflagefläche auf der rotierenden Trommel. Die Trommel selbst kann also im Verhältnis zu ihrem Durchmesser oder einer vergleichbaren Abmessung relativ schmal sein, wenn sie zum Aufwickeln nur eines Wickels (Stranges) vorgesehen ist.

Die rotierende Trommel ist also nicht mit einer üblichen hülsenförmigen Spule o.dgl. zu vergleichen.

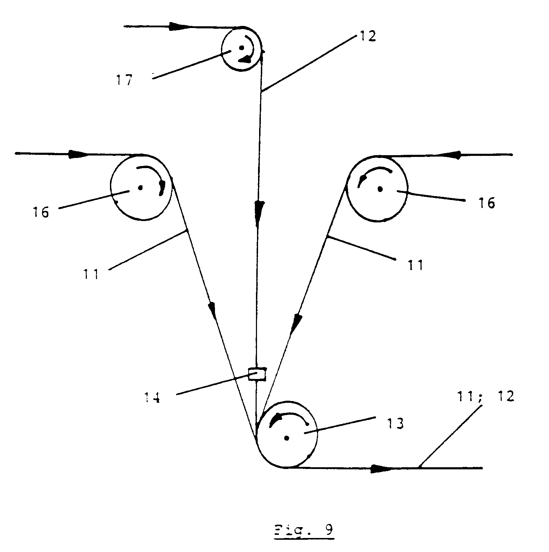

In Figur 7 sind dargestellt: Sechs Hohlfäden 11a, fünf Hohlfäden 11b, die Fäden 12, die gemeinsame Umlenkeinrichtung (eine drehbare Rolle) 13, die hin- und herbewegte (changierende) Fadenführungseinrichtung 14 mit den Fadenführungsösen 15 sowie die Umlenkeinrichtung (eine drehbare Rolle) 17 für die Fäden 12. Die Hohlfäden 11a bilden eine Fadenschar und die Hohlfäden 11b bilden eine Fadenschar, die seitlich geringfügig zueinander versetzt sind, so daß die Hohlfäden 11a über den Lücken zwischen den Hohlfäden 11b laufen und umgekehrt. Beide Fadenscharen werden aus unterschiedlichen Richtungen der gemeinsamen Umlenkeinrichtung 13 zugeführt (s. Figur 8). In dem hierdurch gebildeten Hohlfadenfach bewegt sich die Fadenführungseinrichtung 14 hin und her. Dies ist daran zu erkennen, daß die Hohlfäden 11a in der Darstellung hinter der Fadenführungseinrichtung 14 und die Hohlfäden 11b vor der Fadenführungseinrichtung 14 laufen. Die Fäden 12 werden zunächst über die Umlenkeinrichtung 17 und dann durch die Ösen 15 geführt und, unmittelbar bevor die Hohlfäden 11a und die Hohlfäden 11b die gemeinsame Umlenkeinrichtung 13 berühren, durch die Hin- und Herbewegung der Fadenführungseinrichtung 14 wellenförmig (zick-zack-förmig) zwischen die beiden Hohlfadenscharen eingelegt. Nach Verlassen der gemeinsamen Umlenkeinrichtung 13, in der Darstellung also oberhalb derselben, bilden die Hohlfäden 11a, die Fäden 12 und die Hohlfäden 11b ein sandwichartig aufgebautes Hohlfadenbündel bestehend aus einer Hohlfadenlage mit den Hohlfäden 11a, einer Fadenlage mit den Fäden 12 und einer Hohlfadenlage mit den Hohlfäden 11b. Wie weiterhin zu erkennen, kreuzt jeder Faden 12 mehrere, jedoch nicht alle, Hohlfäden 11a, 11b.

In Figur 8 sind in Seitenansicht die Teile gemäß Figur 7 sowie die Umlenkeinrichtungen 16; 16a und 16b für die Hohlfäden 11a; 11b dargestellt. Die Beschreibung von Figur 7 gilt auch für Figur 8. Darüberhinaus zeigt Figur 8 wie die aus den Hohlfäden 11a und 11b bestehende Hohlfadenschar zunächst über die Umlenkeinrichtung 16 geführt wird und danach in zwei Hohlfadenscharen aufgefächert wird, indem die Hohlfäden 11a über die Umlenkeinrichtung 16a und die Hohlfäden 11b über die Umlenkeinrichtung 16b geführt werden, bevor sie der gemeinsamen Umlenkeinrichtung 13 zugeführt werden. Gut zu erkennen ist auch das hierdurch gebildete Hohlfadenfach, in dem sich die Fadenführungseinrichtung 14 hin- und herbewegt, in der Darstellung also senkrecht zur Bildebene. Figur 8 zeigt darüberhinaus, daß die Hohlfadenscharen aus in je einer gemeinsamen Ebene vorwärtsbewegten Hohlfäden 11a bzw. 11b gebildet werden und unter unterschiedlichen Winkeln, also aus unterschiedlichen Richtungen zu der gemeinsamen Umlenkeinrichtung 13 und damit aufeinanderzu geführt werden.

In Figur 9 ist die Herstellung eines Hohlfadenbündels aus zwei Hohlfadenscharen, die nicht durch Auffächern einer Hohlfadenschar gebildet werden, dargestellt. Beide Hohlfadenscharen werden durch die parallel nebeneinander in je einer gemeinsamen Ebene in ihre Längsrichtung vorwärtsbewegten Hohlfäden 11 gebildet und jede Hohlfadenschar wird um eine eigene Umlenkeinrichtung 16 der gemeinsamen Umlenkeinrichtung 13 zugeführt, wobei die beiden Umlenkeinrichtungen 16 so angeordnet sind, daß die beiden Hohlfadenscharen unter unterschiedlichen Winkeln, also aus unterschiedlichen Richtungen, auf die gemeinsame Umlenkeinrichtung 13 zu also aufeinanderzu laufen. In dem hierdurch gebildeten Hohlfadenfach bewegt sich die Fadenführungseinrichtung 14 hin und her, in der Darstellung also senkrecht zur Bildebene, wodurch die Fäden 12, die zuvor über die Umlenkeinrichtung 17 geführt werden, wellen- oder zick-zack-förmig zwischen die beiden Hohlfadenscharen eingelegt werden, unmittelbar bevor die Hohlfäden 11 und die Fäden 12 gemeinsam durch die Umlenkeinrichtung 13 umgelenkt werden. Im übrigen gelten für Figur 9 die entsprechenden Teile der Beschreibung der Figuren 7 und 8, soweit sie in sich nicht widersprüchlich sind.

## Patentansprüche

1. Hohlfadenbündel aus lagenförmig übereinander angeordneten Hohlfäden (5; 11; 11a; 11b) und zwischen den Hohlfadenlagen angeordneten Fadenlagen, bei welchem in Draufsicht auf das Hohlfadenbündel die Hohlfäden wellenförmig (5) oder im wesentlichen geradlinig (11; 11a; 11b) und die Fäden (6; 12), die einen kleineren Durchmesser aufweisen als die Hohlfäden (5; 11; 11a; 11b), wellenförmig ausgebildet sind, und wobei die Fäden (6; 12) so ausgebildet und/oder angeordnet sind, daß sich die Hohlfäden (5; 11; 11a; 11b) und die Fäden (6; 12) an mehreren Stellen überkreuzen und aufeinander aufgelegt und nicht verwebt, verwirkt oder anderweitig verbunden sind.

2. Hohlfadenbündel nach Anspruch 1 mit wellenförmig ausgebildeten Hohlfäden (5), bei welchem wenigstens die aufeinanderfolgenden Hohlfadenlagen in Längsrichtung des Hohlfadenbündels gegeneinander versetzt angeordnet sind.

3. Hohlfadenbündel nach Anspruch 2, bei welchem die Wellenlänge der Hohlfäden (5) größer als die Wellenlänge der Fäden (6) ist.

4. Hohlfadenbündel nach Anspruch 2 oder 3, bei welchem zwischen jeder Hohlfadenlage eine Fadenlage angeordnet ist.

5. Hohlfadenbündel nach Anspruch 1 mit im wesentlichen geradlinig ausgebildeten Hohlfäden (11; 11a; 11b), bei welchem die aufeinanderfolgenden Hohlfadenlagen seitlich geringfügig zueinander versetzt angeordnet sind.

6. Verwendung des Hohlfadenbündels nach einem oder mehreren der Ansprüche 1 bis 5 zur Herstellung von Stoff- und/oder Wärmetauschern.

7. Verfahren zum Herstellen des Hohlfadenbündels mit wellenförmig ausgebildeten Hohlfäden (5) nach einem oder mehreren der Ansprüche 1 bis 4, bei welchem auf eine rotierende Trommel (1) gleichzeitig wenigstens ein Hohlfaden (5) und wenigstens ein Faden (6) zur Bildung wenigstens eines Wickels aufgewickelt werden, bei welchem vor dem Aufwickeln auf die Trommel (1) der Hohlfaden (die Hohlfäden) (5) über (wenigstens) eine erste und der Faden (die Fäden) (6) über (wenigstens) eine zweite hin- und herbewegte (changierende) Fadenführungseinrichtung geführt wird (werden), bei welchem die erste(n) Fadenführungseinrichtung(en) (2) in jeweils entgegengesetzter Richtung wie die zweite(n) Fadenführungseinrichtung(en) (3) hin- und herbewegt wird (werden) oder die zweite(n) Fadenführungseinrichtung(en) (3) mit einer höheren Geschwindigkeit hin- und herbewegt wird (werden) als die erste(n) Fadenführungseinrichtung(en) (2), bei welchem nach dem Aufwickeln der gewünschten Hohlfadenmenge das Aufwickeln beendet wird und bei welchem der (die) auf der Trommel (1) gebildete(n) Wickel, dessen (deren) Umfangslänge wesentlich größer ist als dessen (deren) Breite, vor oder nach dem Entfernen von der Trommel (1) an wenigstens einer Stelle im wesentlichen quer zur Längsrichtung der Hohlfäden (5) durchtrennt wird (werden).

8. Verfahren zum Herstellen des Hohlfadenbündels mit wellenförmig ausgebildeten Hohlfäden (5) nach einem oder mehreren der Ansprüche 1 bis 4, bei welchem auf eine rotierende Trommel (1) gleichzeitig wenigstens ein Hohlfaden (5) und wenigstens ein Faden (6) kurzzeitig auf einem Teilumfang der Trommel (1) abgelegt werden, bei welchem vor dem Ablegen auf die Trommel (1) der Hohlfaden (die Hohlfäden) (5) über (wenigstens) eine erste und der Faden (die Fäden) (6) über (wenigstens) eine zweite hin- und herbewegte (changierende) Fadenführungseinrichtung geführt wird (werden), bei welchem die erste(n) Fadenführungseinrichtung(en) (2) in jeweils entgegengesetzter Richtung wie die zweite(n) Fadenführungseinrichtung(en) (3) hin- und herbewegt wird (werden) oder die zweite(n) Fadenführungseinrichtung(en) (3) mit einer höheren Geschwindigkeit hin- und herbewegt wird (werden) als die erste(n) Fadenführungseinrichtung(en) (2), bei welchem unmittelbar daran anschließend die Hohlfäden (5) und Fäden (6) unter Beibehaltung der Anordnung und wellenförmigen Ausbildung der Hohlfäden (5) und Fäden (6) von einer zweiten rotierenden Trommel übernommen und darauf aufgewickelt werden, bei welchem nach dem Aufwickeln der gewünschten Hohlfadenmenge das Aufwickeln beendet wird und bei welchem der (die) auf der zweiten Trommel gebildete(n) Wickel vor oder nach dem Entfernen von der zweiten Trommel an wenigstens einer Stelle im wesentlichen quer zur Längsrichtung der Hohlfäden (5) durchtrennt wird (werden).

9. Verfahren zum Herstellen des Hohlfadenbündels mit im wesentlichen geradlinig ausgebildeten Hohlfäden (11; 11a; 11b) nach Anspruch 1 oder 5, bei welchem wenigstens zwei Hohlfadenscharen aus parallel nebeneinander in je einer gemeinsamen Ebene in Hohlfadenlängsrichtung vorwärtsbewegten Hohlfäden (11) unter unterschiedlichen Winkeln, also aus unterschiedlichen Richtungen, aufeinanderzu seitlich geringfügig zueinander versetzt einer gemeinsamen Umlenkeinrichtung (13) zugeführt werden und bei welchem unmittelbar vor dem Auflaufen der Hohlfäden (11) auf die Umlenkeinrichtung (13) in das gebildete Hohlfadenfach mit einer hin- und herbewegten (changierenden) Fadenführungseinrichtung (14) wenigstens ein Faden (12) eingetragen (eingelegt) wird, und zwar derart, daß jeder Hohlfaden (11) von wenigstens einem Faden (12) in - vorzugsweise regelmäßigen - Abständen immerwiederkehrend überkreuzt wird.

10. Verfahren nach Anspruch 9, bei welchem die Hohlfadenscharen vor dem Eintragen (Einlegen) des wenigstens einen Fadens (12) durch Auffächern wenigstens einer Hohlfadenschar gebildet werden, die genauso viele Hohlfäden (11a; 11b) aufweist wie alle daraus gebildeten Hohlfadenscharen zusammen.

## Claims

1. Hollow fiber bundle of hollow fibers (5; 11; 11a; 11b) arranged in layers on top of one another and fiber layers arranged between the hollow fiber layers, in which, as seen in a top view of the hollow fiber bundle, the hollow fibers are made undulating (5) or essentially rectilinear (11; 11a; 11b) and the fibers (6; 12), having a smaller diameter than the hollow fibers (5; 11; 11a; 11b), are made undulating and wherein the fibers (6; 12) are so designed and/or arranged that the hollow fibers (5; 11; 11a; 11b) and the fibers (6; 12) intersect at several locations and are laid one on top of the other, and are not woven, knit, or otherwise joined.

2. Hollow fiber bundle according to claim 1 with hollow fibers (5) made undulating, in which at least the successive hollow fiber layers in the lengthwise direction of the hollow fiber bundle are arranged staggered with respect to one another.

3. Hollow fiber bundle according to claim 2 in which the wavelength of hollow fibers (5) is greater than the wavelength of fibers (6).

4. Hollow fiber bundle according to claim 2 or 3 in which a fiber layer is placed between each hollow fiber layer.

5. Hollow fiber bundle according to claim 1 with hollow fibers (11; 11a; 11b) formed essentially rectilinearly, in which the successive hollow fiber layers are arranged slightly offset laterally with respect to one another.

6. Use of the hollow fiber bundle according to one or more of claims 1 to 5 to manufacture material and/or heat exchangers.

7. Method for manufacturing the hollow fiber bundle with undulating hollow fibers (5) according to one or more of the claims 1 to 4 in which at least one hollow fiber (5) and at least one fiber (6) are wound simultaneously on a rotating drum (1) to form at least one lap, in which the hollow fiber (hollow fibers) (5) is (are) guided over (at least) a first reciprocating (traversing) fiber guide device and the fiber (fibers) (6) is (are) guided over a second reciprocating (traversing) fiber guide device before winding on drum (1), with first fiber guide device(s) (2) being moved back and forth in respectively opposite direction from second fiber guide device(s) (3), or by second fiber guide device(s) (3) being moved back and forth at a higher speed than first fiber guide device(s) (2), with winding being terminated after winding of the desired quantity of hollow fibers and with the lap(s) formed on drum (1), whose circumferential length is considerably larger than its (their) width, being cut before or after removal from drum (1) at at least one point that is essentially transverse to the lengthwise direction of hollow fibers (5).

8. Method for manufacturing the hollow fiber bundle with undulating hollow fibers (5) according to one or more of claims 1 to 4, in which at least one hollow fiber (5) and at least one fiber (6) are laid down simultaneously on a rotating drum (1) in a short space of time, covering a portion of the circumference of drum (1), with hollow fiber(s) (5) being passed over (at least) a first reciprocating (traversing) fiber guide device and fiber(s) (6) being passed over (at least) a second reciprocating (traversing) fiber guide device prior to being laid on drum (1), and with first fiber guide device(s) (2) being moved back and forth in the respectively opposite direction from second fiber guide device(s) (3), or by second fiber guide device(s) (3) being moved back and forth at a higher speed than first fiber guide device(s) (2), and with hollow fiber(s) (5) and fiber(s) (6) being taken over by a second rotating drum immediately thereafter, retaining the arrangement and undulating formation of hollow fibers (5) and fibers (6), and then being wound, with winding being terminated after winding the desired amount of hollow fibers, and with the lap(s) formed on the second drum being cut at at least one point essentially transversely to the lengthwise direction of hollow fibers (5), before or after removal from the second drum.

9. Method for manufacturing the hollow fiber bundle with essentially rectilinearly arranged hollow fibers (11; 11a; 11b) according to claim 1 or 5 in which at least two hollow fiber sheets of hollow fibers (11) are moved forward, toward and parallel to one another in a common plane in the hollow fiber lengthwise direction, at different angles, in other words from different directions, staggered slightly with respect to one another laterally, to a common reversing device (13), with at least one fiber (12) being inserted (laid) in the hollow fiber shed formed by a reciprocating (traversing) fiber guide device (14) immediately before hollow fibers (11) run onto reversing device (13), in such a fashion that each hollow fiber (11) is intersected repeatedly by at least one fiber (12) at (preferably regular) intervals.

10. Method according to claim 9 in which the hollow fiber sheets are formed by fanning out at least one hollow fiber sheet, before insertion (laying) of the at least one fiber (12) that has exactly the same number of hollow fibers (11; 11b) as all of the hollow fiber sheets formed therefrom, combined.

## Revendications

1. Faisceau de fils creux formé de fils creux (5; 11; 11a; 11b) superposés par couches, et de couches de fils disposées entre les couches de fils creux, la conformation étant telle que, dans le faisceau de fils creux vu de dessus, les fils creux soient ondulés (5) ou essentiellement rectilignes (11; 11a; 11b) et les fils (6, 12) qui présentent un diamètre inférieur à celui des fils creux (5; 11; 11a; 11b) soient ondulés, les fils (6; 12) étant conformés et/ou disposés de manière qu'en plusieurs endroits, les fils creux (5; 11; 11a; 11b) et les fils (6; 12) se croisent et soient posés les uns sur les autres en n'étant pas liés par tissage, tricotage ou liés d'une autre manière.

2. Faisceau de fils creux suivant la revendication 1, avec des fils creux (5) ondulés, dans lequel au moins les couches successives de fils creux sont disposées en étant décalées les unes par rapport aux autres dans la direction longitudinale du faisceau de fils creux.

3. Faisceau de fils creux suivant la revendication 2, dans lequel la longueur d'onde des fils creux (5) est plus grande que la longueur d'onde des fils (6).

4. Faisceau de fils creux suivant la revendication 2 ou 3, caractérisé par le fait qu'une couche de fils est disposée entre chaque couche de fils creux.

5. Faisceau de fils creux suivant la revendication 1, avec des fils creux (11; 11a; 11b) essentiellement rectilignes, dans lequel les couches successives de fils creux sont disposées en étant légèrement décalées latéralement les unes par rapport aux autres.

6. Utilisation du faisceau de fils creux suivant une ou plusieurs des revendications 1 à 5 pour la fabrication d'échangeurs de matière et/ou de chaleur.

7. Procédé de fabrication du faisceau de fils creux avec des fils creux (5) ondulés suivant une ou plusieurs des revendications 1 a 4, selon lequel au moins un fil creux (5) et au moins un fil (6) sont enroulés simultanément sur un tambour tournant (1) en vue de la formation d'au moins un enroulement, selon lequel, avant l'enroulement sur le tambour (1), le(s) fil(s) creux (5) passe(ent) sur (au moins) un premier dispositif guide-fil(s) va-et-vient et le(s) fil(s) (6) sur (au moins) un deuxième dispositif guide-fil(s) va-et-vient, selon lequel le(s) premier(s) dispositif(s) guide-fil(s) (2) est (sont) déplacé(s) en va-et-vient respectivement en sens opposé par rapport au(x) deuxième(s) dispositif(s) guide-fil(s) (3) ou le(s) deuxième(s) dispositif(s) guide-fil(s) (3) est (sont) déplacé(s) en va-et-vient à une vitesse plus élevée que le(s) premier(s) dispositif(s) guide-fil(s) (2), selon lequel l'enroulement est achevé après l'enroulement de la quantité requise de fils creux et suivant lequel le(s) enroulement(s) qui est(sont) formé(s) sur le tambour (1) et dont la longueur circonférentielle est sensiblement supérieure à leur largeur est(sont) sectionné(s), avant ou après l'enlèvement du tambour (1), en au moins un endroit essentiellement transversalement à la direction longitudinale des fils creux (3).

8. Procédé pour la fabrication du faisceau de fils creux avec des fils creux (5) ondulés suivant une ou plusieurs des revendications 1 à 4, selon lequel simultanément au moins un fil creux (5) et au moins un fil (6) sont brièvement déposés sur une partie du pourtour d'un tambour (1) tournant, selon lequel le(s) fil(s) creux (5), avant d'être déposé(s) sur le tambour (1), passe(nt) sur au moins un premier guide-fil(s) à va-et-vient et le(s) fil(s) (6) passe(nt) sur au moins un deuxième dispositif guide-fil(s) à va-et-vient, selon lequel le(s) premier(s) dispositif(s) guide-fil(s) (2) est(sont) déplacé(s) en va-et-vient respectivement en sens opposé par rapport au(x) deuxième(s) dispositif(s) guide-fil(s) (3) ou le(s) deuxième(s) dispositif(s) guide-fil(s) (3) est(sont) déplacé(s) en va-et-vient à une vitesse plus élevée que le(s) premier(s) dispositif(s) guide-fil(s) (2), selon lequel, immédiatement par la suite, les fils creux (5) et les fils (6) sont repris, avec conservation de l'agencement et de la conformation ondulée des fils creux (5) et fils (6), par un deuxième tambour rotatif et sont enroulés sur ce dernier, selon lequel l'enroulement est achevé après enroulement de la quantité recherchée de fils creux et selon lequel, avant ou après enlèvement du deuxième tambour, le(s) enroulement(s) formé(s) sur le deuxième tambour est (sont) sectionné(s) en au moins un endroit essentiellement transversalement à la direction longitudinale des fils creux (5).

9. Procédé pour la fabrication du faisceau de fils creux avec des fils creux (11; 11a; 11b) de conformation essentiellement rectiligne, suivant la revendication 1 ou 5, selon lequel au moins deux nappes de fils creux (11) parallèles avancés respectivement dans un plan commun dans la direction longitudinale des fils creux sont amenées sous des angles différents, donc à partir de directions différentes, avec un léger décalage latéral réciproque à un dispositif de déviation (13) commun, et selon lequel, immédiatement avant la montée des fils creux (11) sur le dispositif de déviation (13), au moins un fil est inséré a l'aide d'un dispositif guide-fil(s) (14) à va-et-vient dans la foule de fils creux formée, et cela de telle manière que chaque fil creux (11) soit croisé de façon répétitive par au moins un fil (12) à des intervalles de préférence réguliers.

10. Procédé suivant la revendication 9, selon lequel les nappes de fils creux sont, avant l'insertion dudit (desdits) fil(s) (12), formées par ouverture en foule d'au moins une nappe de fils creux, qui présente exactement autant de fils creux (11a; 11b) que toutes les nappes de fils creux qui en sont formées.
